# EUROPEAN PATENT SPECIFICATION

(11) **EP 0 661 154 B1**
(45) Date of publication and mention of the grant of the patent: **05.11.1997**
(21) Application number: 94120091.7
(22) Date of filing: 19.12.1994
(51) Int. Cl.: B32B 27/08, B32B 15/08, B65D 77/20

(54) **Composite sheet for the re-closure of containers**
Verbundwerkstoff zum Wiederverschliessen von Behältern
Feuille composite pour la refermeture de conteneurs

(30) Priority: 28.12.1993 IT MI932742
(43) Date of publication of application: 05.07.1995
(73) Proprietor: SAFTA S.p.A., I-20122 Milano (IT)
(72) Inventor: Navarini, Franco, I-29100 Piacenza (IT); Molinari, Armando, I-29100 Piacenza (IT); Orlandi, Alfredo, I-29016 Cortemaggiore (Piacenza) (IT)
(74) Representative: Incollingo, Italo

(56) References cited:
- EP-A- 0 160 975
- EP-A- 0 554 152
- DE-U- 9 114 409
- FR-A- 2 585 986
- US-A- 3 335 939

## Description

The present invention concerns composite flexible sheet for repeated apertures and closures of containers such as trays, cups and the like, of products consumable also in more than one successive doses and requesting thus a sure protection, said sheet comprising at least an outer support layer, an inner gas barrier layer, and a layer of pressure sensitive adhesive.

US-A Patent 3 335 939 describes sheet mainly consisting of a single laminate having a support layer of paper bonded to a metal foil through a pressure sensitive adhesive layer coated on the paper layer, said meatal foil showing a portion permanently sealed to the receptacle as well as a line of a weakness.

During the last years the packaging in trays, for instance in form of small tanks or cups, have been obtained by thermoforming plastic films sealed with the help of a sheet, f.i. a thermosealed flexible laminate. Some products of great consumption such as fresh pasta, sliced cold cuts of pork meat etc. have known a good commercial success by adopting this type of packaging combined with the technology of the modified atmosphere consisting in introducing inert gas, CO_{2,} N₂, instead of air.

Among the main advantages of this packaging, following can be mentioned:
- better presentation and protection of the product;
- possibility of using modified atmosphere;
- the container (particularly tanks) once opened becomes a usefull tray.

The most recent evolution of this packaging system is the introduction of the optional "Easy Open" consisting of a facilitated detachment of the cover from the tray; this is possible thanks to the use of special thermosealable films having particular characteristics currently called "Pealable films". One of the main limits of this packaging system is given by the fact that the container is not re-closable. This drawback obliges the industry, for instance food industry to use mono-dose size since the packing, once open can no more provide the protection requested by the packed product (f.i. fresh pasta, salami and the like) which is then to be consumed on only one occasion. The lack of reproducibility involves several other drawbacks, f. i. a higher incidence of the packing cost on the overall cost of the product on sale, because it limits heavily the packing weight and volume range. Further the investements, general costs, transportation and handling disbursements increase accordingly.

First object of the present invention is to provide for a system which eliminates these and other drawbacks by imparting re-closability to the container caps.

An other object is to provide for composite sheets which consist of more films and adhesive layers, and are so treated and preformed to give thermosealed covers which allow (among the others):
1) maximum simplicity of use by the packers without the need to carry out modifications on the packing machines;
2) insertion of the "reclosable system" in the flexible sheet already used as cover;
3) easyness of comprehension and use by the consumer.

A further object is to provide for a particularly easy and simple process to manufacture said pre-formed, hollow-punched and half-cut sheet.

These and other objects are obtained with sheet, according to the invention, whose main characteristics are recited in the product claims.

The advantageous features of a preferred process to manufacture the sheets according to the invention, are also recited in the process claims.

The different features and advantages of the invention will better appear from the following description of the (preferred but not limitative) embodiments shown in the drawings in which:

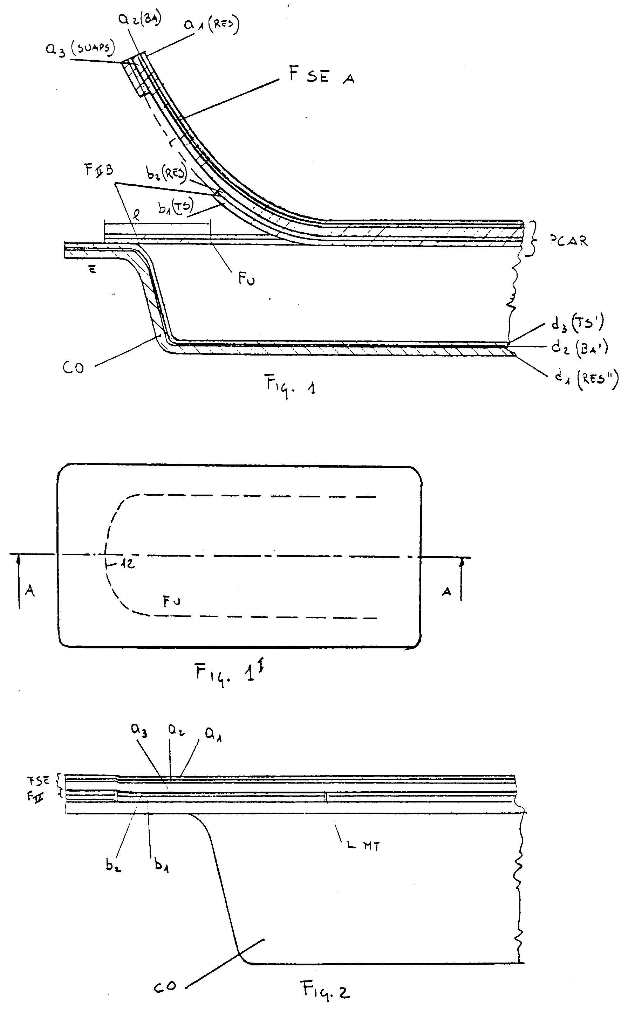

- figure 1 is schematic front view of a composite sheet or laminate according to the invention, detached from the tray mouth;
- figure 1' is the plan view of fig. 1;
- figure 2 is a partially cross-section A-A of the sheet of fig. 1' completely closed on the tray;
- fig. 3 is a perspective view of a cover formed by the sheet according to the invention, substantially open from the there-under cup (similarly to fig. 1);
- fig. 4 is a perspective view of a tree lane sheet;
- fig. 5 is the scheme of the process to manufacture the new sheet which forms the easily and repeatedly open and reclosable cover.

The sheet according to the invention comprises: a) a multilayer outer upper film (FSE); b) an internal lower film (FII) (preferably but not necessarily) multilayer provided with a dinking or hollow-punching; c) press-sensitive adhesive layers.

According to a first feature of the invention, the outer, superior multilayer film (FSE) has at least the functions of : i) printing support; ii) barrier to gas such as CO₂ and N2; iii) means of and for the easy-open and re-closure.

Preferably it comprises: a1) a resistant layer (RES) of a resin selected from the group consisting of polyester (PET) (for example: polyethylene terephthalate such as those on the market under the trade names MELINEX 813 of ICI or MYLAR of Dupont) polyamide (PA) (for example PA-6 or PA-12) or mixtures of polyamides, polypropylene (preferably bi-oriented, for example of the type commercialized under the Trade Mark MOPLEFAN or VIFAN); a2) a layer (BA) of barrier to gas, in particular to the conservative gas such as CO₂, N2 etc. in substitution of air, such as aluminum or metallised film; and a3) an adhesive supporting layer (SUAPS) of polyolefins preferably of polypropylene (f.ex. of the MOPLEFAN OTT type).

The lower inner film (FII) has the function of thermosealing the composite sheet (FSE) + (FII) on the edges of the mouth (BO) of the tray (CO), and consists at least of a polyethylene layer (for ex. of the type poly. EVA).

Preferably also (FII) comprises a stiffening layer (RES'), for example a layer of polyester resin (b₂ = PET) having the same composition and thickness of a₁).

Typically the lower inner film shows a dinking or hollow-punch, (FU) reproducing for instance substantially the edge (E) or shape of the tray (CO) mouth or any other window shape such to offer a good opening and accessability to the contents in the containers.

The preferred materials and relevant thicknesses (in micron) are indicated hereunder:

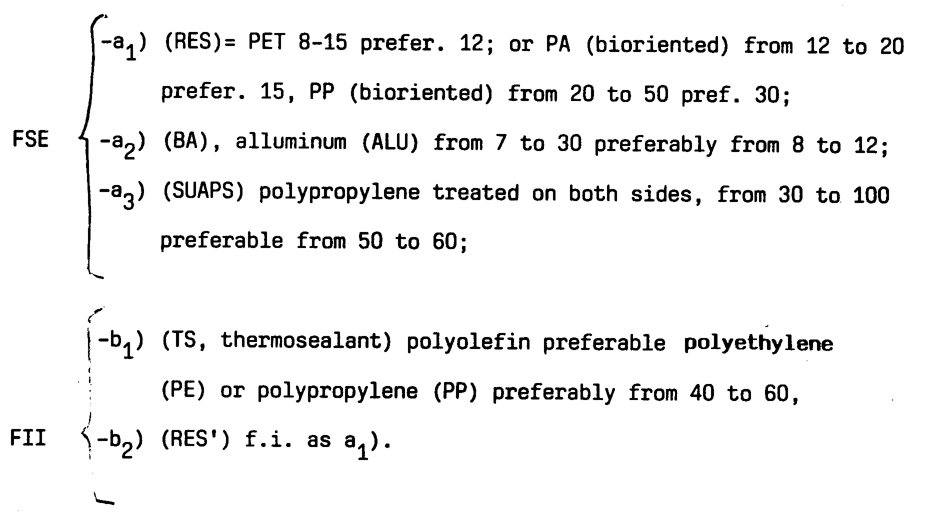

Preferably the container CO is made of a mechanically resistant material (RES''), with a layer d₁) of PVC, PS (polyester), PP, PET or the like, on which can be applied a layer d₂) of barrier (BA'), for ex. of EVOH (ethylenvinylalcohol) and layer d₃) of thermosealant TS' of polyethylene or polypropylene.

In fig. 4 a three lane sheet is represented, each lane showing a dinking or hollow-punch (FU). In fig. 5 is shown the scheme of an advantageously simple process to manufacture the composite sheet openable and reclosable (PCAR) according to the invention.

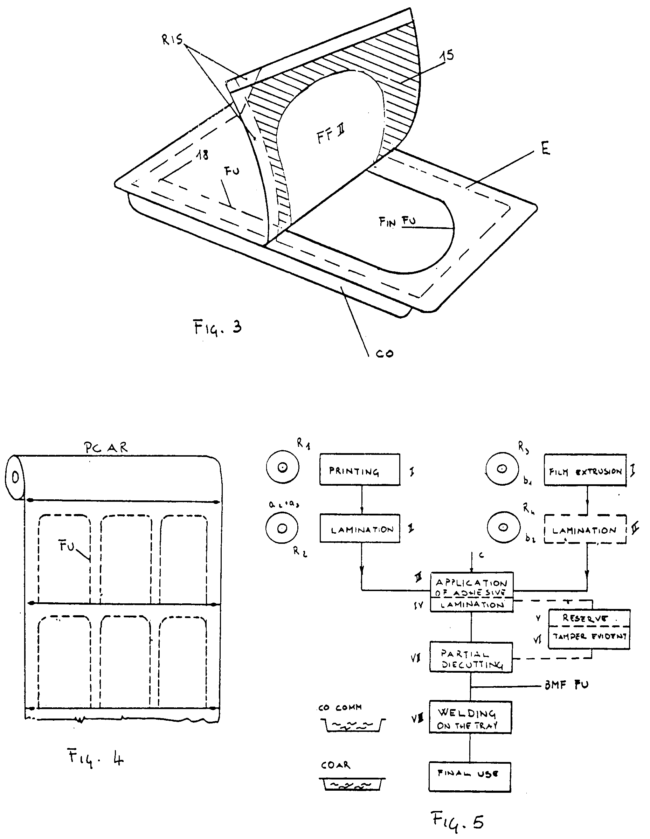

On one side (on the lefthand) an outer upper multilayer film (FES) is prepared as follows:
- in step I a mechanically resistant monolayer film (RES) is printed which is fed from reel or roll (R₁);
- in step II the so printed film (RES.S) = a₁) is coupled with the film of two pre-coupled layers a₁) + a₂) which is fed from the reel R₂. On an other side, the internal lower film (FII) is prepared by coupling preferably (even if not necessarily) the indispensable thermosealant (TS) film b₁) from reel (R₃), with the stiffening film b₂) (RES') from reel (R_{4);}
- in the step III films (FES) and (FII) are provided with press-sensitive adhesive coming from (C);
- in the step IV the so adhesive provided films (FES) and (FII) are bonded;
- in step V a possible zone (RIS) of (so called) reserve (fig. 3) is provided i. e. a conventional zone with a seizing edge for starting the detachement;
- in step VI a tamper evident is provided;
- in step VII the dinking or hollow punch (FU) is carried out;
- in step VIII the openable and reclosable composite sheet (PACR) according to the invention is welded on the tray (CO) (for ex. in form of a tank or cup) filled with edible substances (COMM) whereby from step VIII the closed openable and reclosable packings (COAR) will come out.

From fig. 5 it can be seen that the reserve (RIS) (step V) can be mabe already in step III (adhesivation) by, for ex., prohibiting the internal application of adhesive along a longitudinal edge of the tray. In step V it is possible to carry out the reserve (RIS) of the transversal type. Preferably said reserve (RIS) can be obtained through the half-cut dinking (hollow punch) of the lower film (FII); in such a case the necessity is excluded of obtaining said reserve by acting on the adhesives whereby in the scheme of fig. 5 desappears the step V.

However, if step V is maintained, step VI (provision of the tamper evident) can be carried out in said step V (reserve) and can consist in simply providing adhesive points.

Working of the reclosable System by the consumer receiving the closed packing (COAR).
- 1st phase: opening of the cup-like tank (COAR). The packing according to the invention is advantageously of the "easy open" type: it is opened by lifting the border provided for on the upper laminate (FSE) and by up pulling it (fig.3);the upper laminate is easely separated from the lower laminate (FII) thermosealed on the tank. Characteristically the hollow punched portion of (FII) remains strongly fixed at (FSE), is entrained by said (FSE) until the other terminal edge (18) of the tank opens thereby a wide window (FIN.FU) is provided which allows an easy access to the commercial product (COMM) contained in the cuplike tank (CO);
- 2nd phase: "extraction of the product".
   Through said hollow-punched window (FIN.FU) located on the lower laminate (FII) it is now possible to extract the product (COMM) contained in the tank (CO). The size and the shape of the dinking can be made according to the requirements of the consumer or of the product tp be packed.
- 3rd phase: "reclosing of the tank".
   The reclosure operation takes place by overlaying the superior laminate (FSE) to the lower one (FII) and by exercizing a weak pressure on the tank edges. In this manner a container sealing due to the action of the press-sensitive adhesive and a sure product protection are obtained.

Advantageously also this closure phase is remarkably facilitated whereby the packings according to the invention are not only "easy open" but also "easy reclosable" also for several openings and reclosures. It is finally obtained a multi-use tray even of a capacity well above that currently practiced, for instance from the conventional 100g to the actual 200-300 of cold cuts, from the old 250 to the now possible 500 g. of fresh "pasta" etc. whereby it is possible to take several partial portions of the product and safely protecting the residual portions without incurring into the old necessity of being obliged to consume the product in only one drawing just for the impossibility of a protective reclosure.

The invention is very important for the manufacturing industries which can now widen the range of the products to be packed and, above all, the doses thereof with a remarkable reduction of the packing costs. Since it is now possible to make tanks with, for example 200-250 g. of pork cold cuts (namely with an increase of at least 100 %), a proportional reduction of the packaging incidence on the product on sale is obtained.

## Claims

1. Composite flexible sheet for repeated apertures and closures of containers such as trays or cups, of products consumable also in more than one successive doses and requesting thus a sure protection, characterized in that said sheet includes:
A) an outer multilayer film (FSE) comprising:
(a1) a mechanically resistant and printing support layer of synthetic polymers selected from polyester, polyamide or bioriented polypropylene;
(a2) a gas barrier layer (BA),
(a3) a support layer of pressure sensitive adhesive (SUAPS),and
C) a layer of said (APS) adhesive on said support (SUAPS); and
B) an inner multilayer film (FII) at least comprising:
(b1)at least a thermosealing layer (TS) having a dinking or hollow punch (FU).

2. Composite flexible sheet according to claim 1, characterized in that in the first outer multilayer film (FSE) the layer supporting the printing (a1) is selected from the group consisting of polyester film with a thickness of from 8 to 15, preferably 12 micron, polyamide film with a thickness of 12-20 preferably 15 micron, and bioriented polypropylene with a thickness of from 20 to 50 microns.

3. Composite sheet according to claim 1 or 2, wherein barrier layer (BA) is a metallic or metallized film (a2) on the basis of aluminium with thickness from 7 to 30 preferably from 8 to 12 microns, characterized in that the layer (SUAPS) supporting the press-sensitive adhesive is a polypropylene film having a thickness of from 30 to 100 preferably from 50 to 60 micron, having an adhesive layer (C) on its inner side facing the inner film (FII).

4. Composite sheet according to claim 1, charaterized in that the thermosealable layer (TS) of the inner hollow-punched multilayer film (FII), is of polyethylene with thickness of from 30 to 80 preferably from 40 to 60 microns.

5. Composite sheet according to claim 2 or 4, characterized in that the thermosealable layer (TS) is coupled with a stiffening layer (RES') also hollow-punched b2) containing polyester of 12 microns and having the same composition and thickness of layer a1) of (FES).

6. Composite sheet according to at least one of the preceding claims, charaterized by a transversal or longitudinal reserve (RIS), namely a zone of the upper film (FSE) free of press-sensitive adhesive.

7. Composite sheet according to at least one of the above claims, charaterized by a tamper evident.

8. Process to manufacture a sheet for repeated closures and openings of containers, according to the above claims, characterized by at least the steps consisting in:
on one side
I printing a monolayer (RES) of mechanically resistant film a1) of polyamide or bioriented polypropylene
II coupling said printed film (RES.S) with a two layer pre-coupled film a2) + a3) obtaining thereby the outer three-layer film (FSE);
on the other side
I' coupling preferably a stiffening monolayer film b2) with a thermosealable film b1), thus obtaining the inner lower film (FII),
III applying press-sensitive adhesive on the two multilayer films (FES) and (FII),
IV coupling the two films (FES) and (FII) so provided with adhesive,
V possibly providing the reserve (RIS) to detach (FSE) from (FII) on their longitudinal or transversal edges,
VI providing a tamper evident,
VII making the dinking or hollow-punch in the inner side of (FII) in such a way to provide also the reserve without carrying out step V, and
VIII welding the composite openable and reclosable sheet (PCAR) on the containers open and filled wilh edibles or other stuff.

9. Process according to claim 8, wherein the step V to provide the reserve is carried out in the phase II of adhesivization, and the phase VI of tamper evident is also effected together with phase V.

## Patentansprüche

1. Flexible Verbundfolie für ein wiederholtes Öffnen und Schießen von Behältern wie Schüssein oder Schalen von Produkten, die auch in aufeinanderfolgenden Portionen verbraucht werden und daher einer sicheren Packung bedürfen, dadurch gekennzeichnet, daß sie Folgendes umfaßt:
A) Einen mehrschichtigen äußeren Film (FSE) aus folgenden Teilen:
a1) Eine druckaufnahmefähige und mechanisch widerstandsfähige Schicht aus Polymerstoffen, die unter Polyester, Polyamid und doppeltgerichtetem Polypropilen gewählt werden
a2) Eine gasdichte Schicht (BA);
a3) Eine Trägerschicht für einen druckempfindlichen Klebstoff (SUAPS), und
B) Eine Schicht aus dem erwähnten Klebstoff (APS) auf dem erwähnten Träger (SUAPS); und
C) Ein mehrschichtiger innerer Film (FII), der mindestens Folgendes umfaßt:
b1) mindestens eine wärmeschweißbare Schicht (TS), die gestanzte oder vorgeschnittene Teile (FU) enthält

2. Flexible Verbundfolie nach Anspruch 1, dadurch gekennzeichnet daß im ersten mehrschichtigen äußeren Film (FSE) die druckaufnahmefähige Schicht (a1) aus einer Stoffgruppe gewählt ist, die Folgendes umfaßt: einen Polyesterfilm mit einer Stärke von 8 - 15 Mikron, vorzugsweise 12 Mikron, einen Polyamidfilm mit einer Stärke von 12-20 Mikron, vorzugsweise 15 Mikron, und einen doppeltgerichtetem Polypropilenfilm mit einer Stärke von 20 bis 50 Mikron.

3. Verbundfolie nach Anspruch 1 oder 2, wobei die gasdichte Schicht (BA) aus einem metallischen bzw. metallisierten Aluminiumfilm (a2) mit einer Stärke von 7 bis 30 Mikron, vorzugsweise von 8 bis 12 Mikron besteht, dadurch gekennzeichnet, daß die Trägerschicht (SUAPS) für den druckempfindlichen Klebstoff aus einem Polypropilenfilm mit einer Stärke von 30 bis 100 Mikron, vorzugsweise von 50 bis 60 Mikron besteht und einer Klebstoffschicht (C) trägt, die an der mit dem inneren Film (FII) in Berührung stehenden Innenseite liegt.

4. Verbundfolie nach Anspruch 1, dadurch gekennzeichnet daß die wärmeschweißbare Schicht (TS) des gestanzten mehrschichtigen inneren Films (FII) aus Polypropilen mit einer Stärke von 30 bis 80 Mikron, vorzugsweise von 40 bis 60 Mikron besteht.

5. Eine Verbundfolie nach Ansprüchen 2 oder 4, dadurch gekennzeichnet, daß die wärmeschweißbare Schicht (TS) mit einer Verstärkungsschicht (RES) gepaart ist, die selbst gestanzt ist (b2) und aus Polypropilen mit einer Stärke von 12 Mikron und derselben Zusammenstellung und Stärke der Schicht a1) des Filmes (FSE) besteht.

6. Verbundfolie nach mindestens einem der vorhergehenden Ansprüche, dadurch gekennzeichnet, daß sie eine quer- oder längsgerichtete Reservefläche (RIS) besitzt, d.h. einen Bereich im oberen Film (FSE), der keinen druckempfindlichen Klebstoff hat.

7. Verbundfolie nach mindestens einem der vorhergehenden Ansprüche, dadurch gekennzeichnet, daß sie Mißgriffe anzeigen kann.

8. Verfahren für die Herstellung einer Folie, die sich für das Öffnen und Schließen von Behältern nach den vorhergehenden Ansprüchen eignet, die mindestens durch folgende Phasen gekennzeichnet ist, und zwar:
an einer Seite
I Druck eines mehrschichtigen, gegen mechanische Beanspruchungen a1) widerstandsfähigen Films (RES), der aus Polyamid oder doppeltgerichtetem Polypropilen besteht
II Paarung dieses bedruckten Filmes (RES.S) mit einem zweischichtigen, vorgepaarten Film a2) + a3), um in dieser Weise einen dreischichtigen äußeren Film (FSE) zu erhalten;
an der anderen Seite
I' Paarung eines einschichtigen, vorzugsweise verstärkenden Films b2) mit einem wärmeschweißbaren Film b1), um damit eine untere Innenschicht (FII) zu erreichen;
III Anbringung des druckempfindlichen Klebstoffes auf den zwei mehrschichtigen Filmen (FES) und (FII),
IV Paarung der zwei derart mit Klebstoff versehenen Filme (FES) und (FII),
V Eventuelle Voreinstellung der Reservefläche (RIS), um die Filme (FSE) und (FII) an den Längs- bzw. Querkanten ablösen zu können,
VI Voreinstellung einer Einrichtung gegen eventuelle Mißgriffe,
VII Ausführung einer Stanzung oder Vorbeschneidung an der Innenseite des Filmes (FII), sodaß die Voreinstellung der Reservefläche auch ohne die Phase V geschehen kann, und
VIII Schweißung der Folie, für die Öffnung und Schließung (PCAR) von Behältern, die mit Lebensmitteln bzw. anderen Materialien gefüllt sind.

9. Verfahren wie nach Anspruch 8, in dem die Phase V, für die Voreinstellung der Reservefläche schon während der Phase II. der Klebstoffanbringung geschieht, sowie auch die Phase VI der Voreinstellung der Einrichtung für die Anzeige von Mißgriffen gleichzeitig mit der Phase V. erfolgt.

## Revendications

1. Feuille composite flexible pour l'ouverture et la fermeture répétée des récipients, comme des bacs ou des plateaux contenant des produits qui peuvent être consommés tour à tour et qui par conséquent demandent une protection sûre, caracterisée en ce que la dite feuille comprend:
A) une pellicule extérieure multicouche (FSE) qui se compose de:
(a1) une couche de support à l'impression et résistance à l'action mécanique constitué de polymères selectionnés entre polyester, polyamide ou polypropylène biorienté:
(a2) une couche d'obstacle aux gaz (BA);
(a3) une couche de support pour un adhésif sensible à la pression (SUAPS) et
C) une couche de cet adhésif (APS) sur le support susdit (SUAPS); et
B) une pellicule interne multicouche (FII) qui présente au moins:
(b1) une couche thermoscellante (TS) qui présente des parties découpées ou pré-découpées (FU).

2. Feuille composite flexible, selon la revendication 1, caractérisée par le fait que dans la première pellicule externe multicouche (FSE) la couche de support pour l'impression (a1) a été choisie dans le groupe qui comprend: pellicule en polyester ayant une épaisseur de 8 à 15 microns, de préférence 12 microns, pellicule en polyamide avec une épaisseur de 12-20 microns, de préférence 15 microns, et polypropylène biorienté avec une épaisseur de 20 à 50 microns.

3. Feuille composite flexible, selon la revendication 1 ou 2, où la barriere (BA) en pellicule métallique ou métallisée (a2) sur une base en alluminium avec une épaisseur de 7 à 30 microns, de préférence de 8 à 12 microns, caractérisée par le fait que la couche (SUAPS) de support pour l'adhésif sensible à la pression est une pellicule en polypropylène avec une épaisseur de 30 à 100 microns, de préférence de 50 à 60, ayant une couche adhésive (C) sur le côté interne au contact avec la pellicule interne (FII).

4. Feuille composite, selon la revendication 1, caractérisée par le fait que la couche thermoscellante (TS) de la pellicule interne multicouche découpée (FII), est en polypropylène avec une épaisseur de 30 à 80 microns, de préférence de 40 à 60 microns.

5. Feuille composite, selon la revendication 2 ou 4, caractérisée par le fait que la couche thermoscellable (TS) est accouplée avec une couche de renforcement (RES'), elle aussi découpée b2) costituitée en polyester de 12 microns et de la même composition et épaisseur de la couche a1) de la (FES).

6. Feuille composite, selon au moins une des revendications précédentes, caractérisée par une réserve transversale ou longitudinale (RIS), c'est-à-dire une partie de la pellicule supérieure (FSE) dépourvue d'un adhésif sensible à la pression.

7. Feuille composite, selon au moins une des revendications susdites, caractérisée par une mise en évidence les violations.

8. Procédé pour la fabrication d'une feuille pour la fermeture et l'ouverture répétée des récipients, selon les revendications précédentes, caractérisée par au moins les phases suivantes qui consistent à:
d'un côté
I imprimer un film d'une seule couche (RES) résistant à l'action mécanique a1) en polyamide ou en polypropylène biorienté
II accoupler cette pellicule imprimée (RES.S) avec une pellicule à deux couches pré-accouplée a2) + a3), pour obtenir une pellicule externe à trois couches (FSE);
de l'autre côté
I' accoupler de préférence une pellicule à une seule couche de raidissement b2), avec une pellicule thermoscellante b1), pour obtenir une pellicule interne inférieure (FII),
III appliquer l'adhésif sensible à la pression sur les deux pellicules multicouche (FES) et (FII),
IV accoupler les deux pellicules (FES) et (FII), fournies donc d'un adhésif,
V mettre éventuelle en ouvre la réserve (RIS) pour détacher (FSE) de la (FII) sur les bords longitudinals ou transversals,
VI mettre en oeuvre la mise en évidence de possibles violations,
VII faire le découpage ou du pré-découpage sure le coté interne de la (FII) de façon à mettre en oeuvre aussi bien la réserve sans devoir effectuer la phase V, et
VIII soudier la feuille composite qui peut s'ouvrir et se fermer (PCAR), sur les récipients ouverts et remplis avec des produits alimentaires ou d'autres matériels.

9. Procédé, selon la revendication 8, dans lequelle la phase V pour la realisation de la réserve est effectuée dans la phase II lors de l'enduction de la substance adhésive, comme d'ailleur la phase VI du système del mise en évidence de possibles violations est effectuée en même temps que la phase V.
